# EUROPEAN PATENT APPLICATION

(11) **EP 2 540 182 A1**
(43) Date of publication of application: **02.01.2013**
(21) Application number: 12174377.7
(22) Date of filing: 29.06.2012
(51) Int. Cl.: A43B 13/04, A43B 1/00, C05F 9/00, C05F 17/00

(54) **Compostable shoe, methodof composting organic matter and corresponding uses**

(30) Priority: 01.07.2011 ES 201131118; 23.01.2012 ES 201230082
(71) Applicant: Puentelago Anil S.L., 46120 Alboraya (ES)
(72) Inventor: Segarra Tormo, Ernesto, 46010 Valencia (ES)
(74) Representative: Curell Suñol S.L.P.

(57) **Abstract**

The aim of the invention is a leather shoe that is suitable for being subjected to a composting process, that is, an aerobic degradation that results in a compost, or, stabilised organic matter, free of pathogens and contaminating elements, and when applied to the ground is beneficial. The shoe comprises leather tanned with titanium salts or with oxazolidine. It also has a sole made from a biodegradable thermoplastic polymer such as, for example, polycaprolactone, polylactic acid, polybutylene succinate, starch/cellulose acetate, polyurethane, polyhydroxy alkanoates, polythioesters, propanodiol, biodegradable copolyester, starch with fibres, and mixtures of the above. The adhesive used is an aqueous base and the insole and/or the laces are cotton. The composting method includes preparing a compostable mass of shoes with organic matter. These shoes are a good structuring material for the compost, wholly or partially replacing the crushed woody plant remains. The compost obtained can be used as fertiliser.

## Description

### Field of the invention

The invention relates to a compostable shoe and to a method of composting organic matter, in particular a composting method wherein shoes are included in the compostable mass.

The invention also relates to the use of shoes for composting and the use of a compost obtained from a compostable mass comprising shoes.

The invention also relates to a compostable shoe.

### State of the art

It is estimated that during 2015 more than 20,000 million pairs of shoes will be consumed. Most of them will end up on a rubbish tip, or in an incinerator, which in both cases means a considerable environmental impact.

Leather is an animal skin that has been subjected to a treatment to, among other things, prevent its decomposition, that is, leather is a product that is complex to recycle, particularly any type of recycling that includes biodegradation.

Usually leather is treated (tanned) with chrome salts. These leathers are particularly resistant to biodegradation, lasting even hundreds of years without degrading. Also, if these leathers or the shoes with these leathers are incinerated there is the possibility that chrome present in them passes from Cr(III) to Cr(VI), which is carcinogenic. Other leather treatments are known, for example using phosphonium, glutaraldehyde, plant extracts or methacrylate resins, some of which have better biodegradability than the leathers treated with Cr salts. Nevertheless, it is unknown whether or not these shoes are compostable.

However, there is the need to develop new strategies that enable improving biodegradation and, particularly, the composting of shoes.

In this description and claims, with the expression "compostable" it must be understood that it is suitable for biodegrading, particularly for biodegrading aerobically (that is, in the presence of oxygen and at thermophilic temperatures) to obtain a compost.

The degradation of organic matter in nature is due essentially to the decomposing action of organisms that transform this material into chemical compounds that can be used by the ground and the plants. Depending on the chemical composition of the organic matter and the characteristics and conditions of the environment, this biodegradation will be faster or slower.

Generally, it is considered that a product or substance is biodegradable if it can decompose the chemical elements that form it, due to the action of biological agents, such as plants, animals, micro-organisms and fungi, under natural environmental conditions. Biodegradation is the characteristic of some chemical substances to be able to be used as a substrate for micro-organisms, that use them to produce energy (through cell respiration) and to create other substances like amino acids, new tissues and new organisms.

The biodegradation of these compounds can occur in two ways:
- aerobic degradation.
- anaerobic degradation.

When referring to composting this then specifies the conditions of the environment and the organisms responsible for this biodegradation, and therefore it is necessary to know if the organic matter to be degraded does so in these conditions. It can be said that composting consists in degrading the solid organic matter by micro-organisms, transforming it into a stabilised, hygienized, material called compost, in aerobic conditions and thermophilic temperatures, having a degree of mineralization which will depend (*inter alia*) on the total process time.

Through composting, this transformed organic matter is converted into a type of humus (compost) that is used as a support and source of nutrients for plant species.

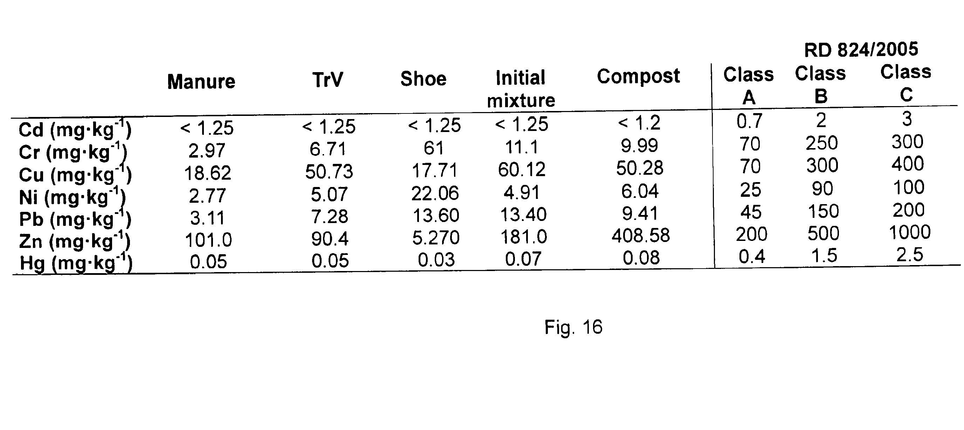

It can be considered, therefore, that the biodegradability of a material is a necessary condition for its compostability, but it is not sufficient to say that the material biodegrades so that the result of said process is a compost. So for example, petrol can be considered a biodegradable element (given that there are bacteria capable of degrading it and which is being considered for use in marine rubbish dumps) but it cannot be considered compostable. On the other hand, for example, a compost must fulfil certain heavy metal maximum content requirements. In Spain these maximum values are set out in Royal Decree 824/2005. It may also occur that a certain material, even though it is biodegradable, cannot be considered compostable if it does not comply with the minimum requirements set out by law. In this description and claims it is considered that a compostable material is that which, preferably, allows obtaining a compost that complies with the legally established requirements or, at least, that fulfils the limits indicated in Royal Decree 824/2005 (see data in Fig. 16).

Composting is the main process or way that nature recovers and closes the cycle of matter. The key conditions are as follows:
- It is a biological degradation process of the organic matter carried out by micro-organisms: bacteria, fungi and actinomycetes.
- These micro-organisms are aerobic, they need the presence of oxygen to develop their biological activity.
- It is an exothermic process, releasing energy in the form of heat.
- In the balance of masses in the process there is a hydric deficit.

It is obvious that although any solid organic material would be likely to being degraded through composting, not all will behave the same way or have the same needs and requirements so that the micro-organisms that develop the process, carry out their degrading activity in optimum conditions on this organic material. Therefore, when trying to learn about the possibilities of treating any organic material through composting, it is necessary to know its degree of "compostability" which will depend mainly on its chemical composition and its physical structure.

As mentioned, to compost any solid organic material it is essential that aerobic conditions (presence of oxygen) are present throughout the mass, and therefore in most cases (cattle defecation, purifier sludge, food remains, etc...) it is necessary to mix them with another material to create a structure or matrix of micro pores that allow air to pass through to the inside. This material is known as "structuring" and milled wood is usually used due to its slow degradation, its capacity to absorb humidity, the supply of carbon for correcting the balance of nutrients and the capacity to chose the most suitable particle size to which it is milled. Depending on the area where a composting plant is located, having enough plant origin structuring material to manage the organic remains that it receives, may be a difficult task, *inter* alia, because of its seasonability.

The European standard EN 13432 "Requirements for packaging recoverable through composting and biodegradation - Test scheme and evaluation criteria for the final acceptance of packaging ", defines the characteristics that a material must own in order to be defined as "compostable". According to UNE EN 13432, a compostable material must be metabolically convertible into a carbon dioxide. This property can be measured with a standard test method, the EN 14046 method (also published as ISO 14885, biodegradability in controlled composting conditions). The level of acceptance is equivalent to 90% and it must be reached in less than 6 months.

More information on composting can be found in the article "A general introduction to composting", by R. Plana, from the book "Composting" Edit. Sociedad Española de Agricultura Ecológica. ISBN: 978-84-692-6 833-9, the contents of which is considered part of the state of the art known to a person skilled in the art.

### Disclosure of the invention

The aim of the invention is to overcome these drawbacks. This aim is achieved by means of a shoe **characterised in that** it comprises leather tanned with titanium salts or leather tanned with oxazolidine.

A particularly advantageous solution is obtained when the leather is a leather tanned with titanium salts.

Another particularly advantageous solution is obtained when the leather is a leather tanned with oxazolidine.

In order to obtain a complete composting of the shoe, it is advantageous that is comprises a sole made of a biodegradable thermoplastic polymer. In this respect, it is particularly advantageous that the sole of the shoe is made from one of the following materials:
a) a material from the group made up of polycaprolactone (PCL), polylactic acid (PLA), polybutylene succinate (PBS), starch/cellulose acetate (SCA), polyurethane (PU) and mixtures thereof. Preferably the polycaprolactone comprises an additive from the group made up of dioctyl phthalate (DOP), polyethylene glycol (PEG), nanoclay, sorbitol acetal and cork. Advantageously the mixture is a mixture of polycaprolactone with polylactic acid and polybutylene succinate, or the mixture is a mixture of polycaprolactone with polyethylene glycol. For its part, the polyurethane is preferably a thermoplastic and biodegradable polyurethane and, advantageously, it is a mixture with polycaprolactone.
b) a material from the group made up of polyhydroxyalkanoates, polythioesters and propanodiol.
c) a material made from mixtures of microbial aliphatic polyesters with starch.
d) poly(hydroxybutyrate-co-hydroxyvalerate) (PHBV)
e) a biodegradable copolyester.
f) a mixture of starch with fibres.

The polyhydroxyalkanoates are provided with numerous thermoplastic and biodegradable properties in any environment. Out of these, the poly(3-hydroxybutyrate-co-3-hydroxyvalerate) or PHBV is particularly advantageous, because it is more flexible and above all less fragile than, for example, PHB (poly-3-hydroxybutyrate). It is possible to produce it from glucose and propianate substrates using bacteria. Also the butyrate-valerate copolymers have been obtained supplying propianate. This product is sold by the firm Zeneca under the trade name *Biopol*®).

Ralstonia eutropha produces alkyl alkanoates, in particular poly(3-hydroxy-S-propyl-o-thioalkanoate. These polyester copolymers and homopolymers (PTE) have a melting point (Tm) that exceeds approximately 50°C the oxygenated analogue.

The 1,3-propanediol represents one of the base substances for producing polytrimethylene-terephtalate (PTT), a polymer used for manufacturing high quality fibres. It is possible to obtain it by means of a biotechnological method that enables preparing 1,3-propanediol via a fermentation method using simple sugars as the base matter. The particular aspect of this process lies in the use of a recombinant micro-organism, specifically prepared to catalyse the fermentation process. This 1,3-propanediol, produced in a biotechnological manner, can also be used to manufacture polyurethane and certain elastomers.

Lactic acid constitutes an important base substance for producing polylactic acids (which are biodegradable polymers).

Starch is a biopolymer that can be moulded by traditional plastics transformation methods, such as extrusion, injection, thermal shaping, etc. It is renewable and biodegradable. It can be used in its native state as a filler in a biodegradable polymeric matrix, or it can be used in a destructured state (that is, after losing its native granular structure) as a thermoplastic polymer. As a filler is can be added to various polymers, such as for example polyethylene (PE), polyhydroxybutyrate-co-hydroxyvalerate (PHBV), polylactic acid (PLA), etc. In its destructured state it can be used in polymer mixtures, for example combined with polycaprolactone (PLC). It can also be used mixed with fibres.

Also it is advantageous that the sole is a biodegradable thermoplastic elastomer or thermoplastic rubber (TPE). There are six families of TPEs, that define the group made up of styrenic block copolymers (TPS), thermoplastic elastomer polyester (TPC), mixtures of polyolefins (TPV), elastomeric alloys, thermoplastic polyurethanes (TPU), thermoplastic copolyester and thermoplastic polyamide (TPA).

A particularly advantageous material for the sole of the shoes according to the invention is the material sold under the trade name APINAT® by the Italian firm API spa, Via Dante Alighieri 27, 36065 Mussolente (Vicenza) Italy, (as it was sold during the first six months of 2011). Preferably the material is the so-called DP 1888.

Another particularly advantageous material for the soles of the shoes is a material called Mater-Bi ® sold by Novamont, which is a biodegradable and compostable material, a mixture of starch and PLC (at 50%).

Advantageously, at least one of the remaining shoe components, is also biodegradable and very advantageously all the shoe components are compostable, as this way it is possible to obtain a 100% compostable shoe. So, preferably when manufacturing the shoe aqueous base adhesives are used, which advantageously are a caprolactone. Also advantageous is the adhesive sold by the firm BASF under the trade name Epotal P 100 Eco®, together with a cross-linking agent such as hexamethylene-1, 6-diisocianate (for example the one sold as Basonat®) and thickening agent (such as Collacral PU 80®). It is also suitable to use another aqueous base adhesive called CIPUR ® 6500 sold by Cipade, which has a greater drying speed. For its part, advantageously the insole and/or the laces are made of cotton or Ti tanned leather (or leather tanned with oxazolidine). Preferably the dress insole is split with Ti tanned leather (or tanned with oxazolidine) and felt. Alternatively, the dress insole is reversible, with one split face Ti tanned (or tanned with oxazolidine), the other split face with linen and felt between the two. The assembly insole is made from salpa (cellulose) (preferably with some latex) and/or the toe cap is cellulose. The insole can also be made of cotton. Preferably the threads are made of cotton and /or linen.

In fact, the final aim is to obtain a completely compostable shoe, that can be deposited in an organic waste container or in a household composter (in which case it is advantageous that the shoe be cut into pieces so that it has a greater surface area in contact with the micro-organisms and with the environmental conditions of the compost (humidity, temperature, air, etc.)).

The aim of the invention is also a method for composting organic matter, **characterised in that** it comprises a stage of preparing a compostable mass in which shoes according to the invention have been mixed with organic matter.

Effectively, it has been observed that the leather treated (that is, tanned) with titanium salts or with oxazolidine has much more favourable behaviour with respect to composting. So, these skins degrade up to 50% in 30 days, at a constant temperature and in a liquid medium. This way, the environmental impact of discarded shoes can be reduced considerably, and the product obtained (the compost) can be used, with all its inherent advantages.

The leathers tanned with oxazolidine also have more favourable behaviour with respect to composting.

Biodegradability has been determined according to standard ASTM D5209/92, where the biodegradability determination is given via the indirect quantification of the carbon dioxide produced during the degradation of the plastic material by micro-organisms presents in waste water from municipal purifying plants (ARM), with cellulose being the pattern chosen for this type of studies. Collagen is used as a reference pattern to control the correct evolution of the experiment and the interpretation of the results. In view of the reduced capacity of the ARM inoculum to degrade tanned leather, it was chosen to use tanning waters as the inoculum.

It must be borne in mind that, in comparison, the leathers tanned with Cr salts degrade only 14% in 42 days.

Additionally, composting tests have been run on a laboratory, pilot and industrial level, which support the good compostability and other beneficial properties that are indicated below.

Leathers tanned with Ti are distinguished from leathers tanned by other techniques, for example, because of the high content of traces of titanium in the skins tanned with Ti.

Preferably the organic matter comprises cattle defecations, which very preferably is bovine manure. Also, it is advantageous that they comprise FROM (organic fraction of municipal solid waste).

Preferably the method comprises a stage of crushing the shoes.

Advantageously the method comprises a stage of recirculating parts of the non-degraded shoes.

The aim of the invention is also the use of shoes according to the invention for the composting thereof.

Another object of the invention is the use of shoes according to the invention as structuring material for the composting of organic matter.

The object of the invention is also the use of a compost obtained from a compostable mass comprising organic matter and shoes according to the invention, as fertiliser.

Another additional object of the invention is the use of shoes according to the invention as a full or partial substitute for milled woody plant remains in the composting of a compostable mass comprising organic matter.

Similar to the comments regarding the method according to the invention, preferably the organic matter comprises cattle defecations, particularly bovine manure.

### Brief description of the drawings

Other advantages and characteristics of the invention will be appreciated from the following description, wherein, in a non-limiting manner, some preferable embodiments of the invention are described, with reference to the accompanying drawings, wherein:
Fig. 1, laboratory scale test, preliminary analysis of the substrates used - first part.
Fig. 2, laboratory scale test, preliminary analysis of the substrates used - second part.
Fig. 3, laboratory scale test, initial analysis of the filler mixtures- first part.
Fig. 4, laboratory scale test, initial analysis of the filler mixtures - second part.
Fig. 5, laboratory scale test, final analysis of the filler mixtures - first part.
Fig. 6, laboratory scale test, final analysis of the filler mixtures - second part.
Fig. 7, laboratory scale test, balance of percentual mass of each treatment at the end of the composting process.
Fig. 8, laboratory scale test, variation of pH and conductivity in the initial and final mixtures in each treatment.
Fig. 9, laboratory scale test, balance of organic C in the initial and final mixtures in each treatment.
Fig. 10, laboratory scale test, initial and final analysis of shoe material- first part.
Fig. 11, laboratory scale test, initial and final analysis of shoe material- second part.
Fig. 12, pilot scale test, mixture of the shoes, theoretical mix of a shoe and the real mixture used in the test.
Fig. 13, pilot scale test, analysis of the materials used.
Fig. 14, pilot scale test, analysis of the final compost.
Fig. 15, pilot scale test, results of the germination and phytotoxicity tests.
Fig. 16, pilot scale test, heavy metal contents of the initial material samples, the mixture added to composting and the final compost obtained, compared with the limit values given by Royal Spanish Decree 824/2005 to determine the quality of a compost.

### Detailed description of some embodiments of the invention

### A) LABORATORY SCALE TEST

### A1 - Materials and Methods

### Materials used

i. Soles: A total mass of 8.62 kg + 8.1 kg.
ii. Insoles: A total mass of 2.7 kg + 2.1 kg.
iii. Leather: in three colours: blue, red and brown, with a total mass of 3.8 kg + 5 kg.
iv. Counters: 50 + 40 units, with a total mass of 0.4 kg + 0.3 kg.
v. Laces: One strip of lace for shoes with a total mass of 0.02 kg.
vi. Cotton thread: two cotton thread reels with a mass of 0.1 kg and 0.1 kg.
vii. Nylon thread: A whole reel of nylon thread with a mass of 0.03 kg.
viii. Two pots of Flexiplas® - 300 ml and 400 ml.
ix. One bottle of Basonal LR 9056®, from the firm BASF containing 1 kg of product.
x. One bottle of Collacral UP 80®, from the firm BASF containing 1 kg of product.
xi. One bottle of Epotal P 100 ECO®, from the firm BASF containing 1 kg of product.

The possibility that there exists a compostable footwear model without laces is foreseen.

The Basonal LR 9056®, Collacral UP 80® and Epotal P 100 ECQ® products are for making up an adhesive glue which, according to BASF, is compostable. The adhesive is made up according to the following recipe:
The 1-2% Collacral (to adjust viscosity) and the 3-5% de Basonat (which acts as a polymer) is added to the Epotal. It is stirred continually, with a stirrer for at least 2 minutes.

It was necessary to condition the particle size of the various elements making up the shoes so that their surface to volume ratio adjusted to that of the experiment reactors. To do this all the materials were cut into pieces by hand to a particle size of approximately between 2 x 2 and 3 x 3 cm, except the threads which were cut into 5 cm fragments. They were all mixed until an even mixture was obtained.

As complementary materials for the test, milled woody plant remains were used, or crushed plant remains (TrV), which were used to make the structuring material, and three waste organic materials:
- waste water purifier sludge (EDAR) from an urban nucleus without heavy industry.
- bovine manure (EST) from a farm.
- food remains, both raw and cooked. This would be equivalent to the fraction known as FORM (organic fraction from municipal solid waste), which is collected selectively in many municipalities to be treated by anaerobic digestion and/or composting.

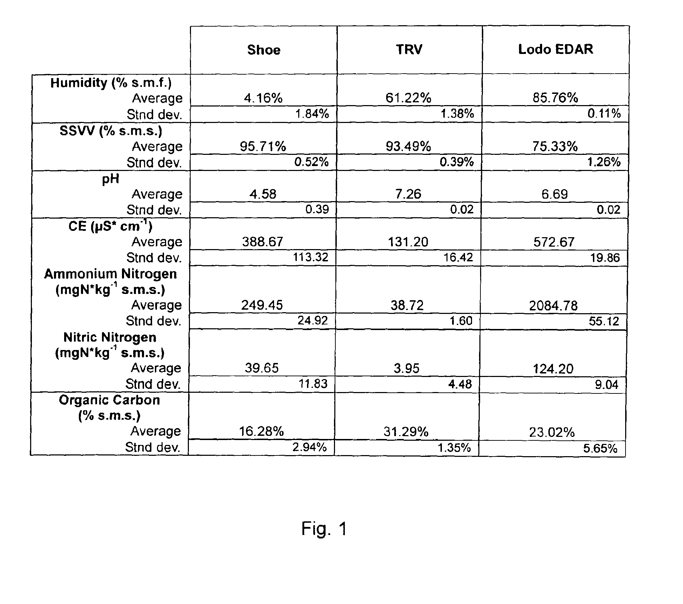

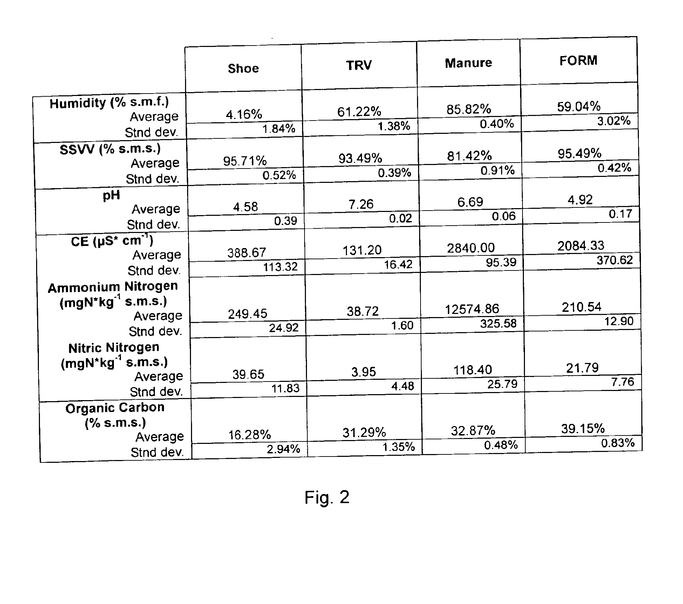

The tables in Figs. 1 and 2 show a physicochemical preliminary analysis of the substrates used in the two parts of the laboratory scale test.

The structuring material is used for mixing with the organic waste that is to be composted, giving it a porous matrix that allows air to pass inside it and guarantees that the process conditions are aerobic (in the presence of oxygen), corrects humidity excesses and any possible nutrient imbalances.

The EDAR sludge is a homogeneous organic waste product, rich in organic matter and easy to handle, and therefore it is ideal for using in a first experimentation stage.

Bovine manure is by its nature homogeneous, easy to handle and represents a typical waste product used in cattle defecation composting plants.

Food remains, both cooked and precooked would be equivalent to the organic fraction from selectively collected domestic or urban waste (FORM). It is a heterogeneous material in its forms and composition, but at the same time it is the most frequently used in composting plants virtually all over the world, as it is the most obvious waste product for citizens and, therefore, the one with more political and economic interest behind its management and processing, although this treatment may not always be the most appropriate.

### Composting reactors

The experimental equipment used consists of 12 cylindrical composting reactors each with a 30 litre useful capacity. These reactors are inserted into made to measure containers that guarantee significant external thermal insulation, and therefore the material to be composted inside it is not influenced by ambient temperature. Ventilation is provided by means of a compressor motor connected to a 100 litre capacity drum, where air is stored at a pressure of 8 bar. Two temperature probes in each reactor allow the temperature of the mass deposited in them to be monitored in two points at different heights.

The exit air flow from each reactor is channelled by a multiplexed system of valves and tubes as far as an oxygen analyser, with the oxygen concentrations in the mass in each reactor being monitored and controlled in this way. By means of a PLC automaton (Programmable Logic Controller) the ventilation is each reactor is controlled independently, both in a timed way and according to the temperature and oxygen values in each reactor. The PLC is connected to a PC where all the variables measured in each reactor are registered automatically.

The controlled process variables were established according to the following values:
- temperature: the average value of the two temperature probes cannot exceed 60°C.
- oxygen: the oxygen values inside the reactor cannot be less than 5%.
- alarm air flow rate: 25 l·min-1 when either of the two previous parameters is outside the set limits.
- air flow rate in normal conditions: 5 l·min-1.

### Experimental method

Eight different treatments were established to be able to study the effect of the shoes in the composting of various materials. Given the limited number of reactors (12) and the need to use three replicas for each treatment, the test was done in two parts (called 1 st test (or 1 st part) and 2nd test (or 2^{nd} part)). The treatments carried out were as follows:
1 st Part:
   i. 3 "Blank" reactors: only TrV
   ii. 3 "Blank problem" reactors : TrV + mixture of shoes, with a proportion of mixture at a volume of 3:1
   iii. 3 "Control 1" reactors: TrV + EDAR sludge (3: 1)
   iv. 3 "Problem 1" reactors: Trv + shoes + EDAR sludge (2:1:1)
2nd Part:
   v. 3 "Control 2" reactors : TrV + Manure (3: 1)
   vi. 3 "Problem 2" reactors : TrV + Shoes + Manure (2: 1: 1)
   vii. 3 "Control 3" reactors: TrV + FORM (3: 1)
   viii. 3 "Problem 3" reactors: Trv + Shoes + FORM (2:1:1)

In all cases humidity was corrected to guarantee that the experiment was started with the optimum values for the composting process. In the first part of the test a quantity of shoe materials was used that would be equivalent to about 20 pairs of shoes with a total mass of 15.7 kg, of which 1 kg was removed for analysis. In the second part the mixture would be equivalent to about 18 pairs of shoes, with a total mass of 13.8 kg. To these mixtures, the proportional amount of Flexiplas was added and, in the second part of the test, the proportional amount of the compostable glue was also added, then all the materials were homogenised again later.

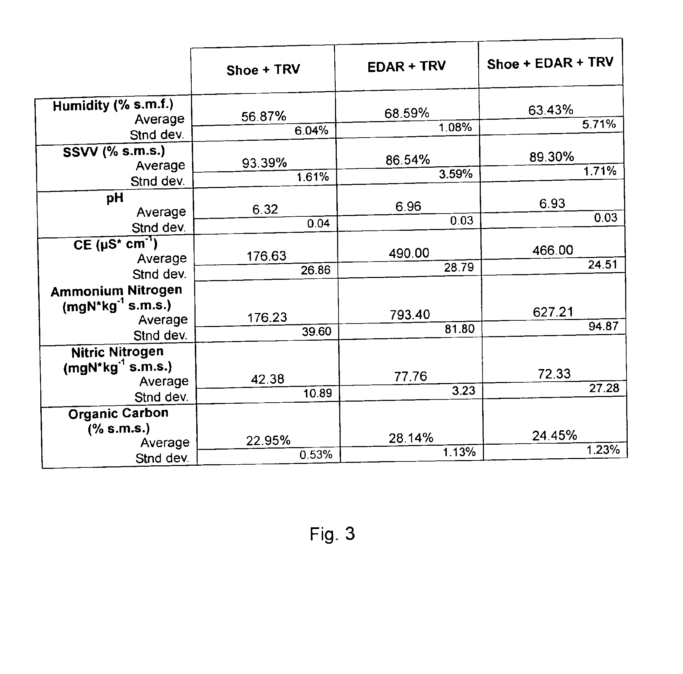

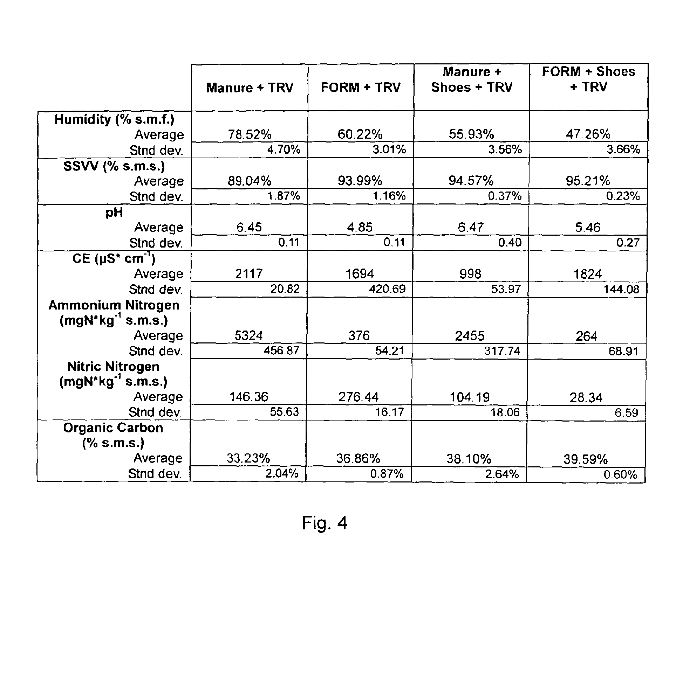

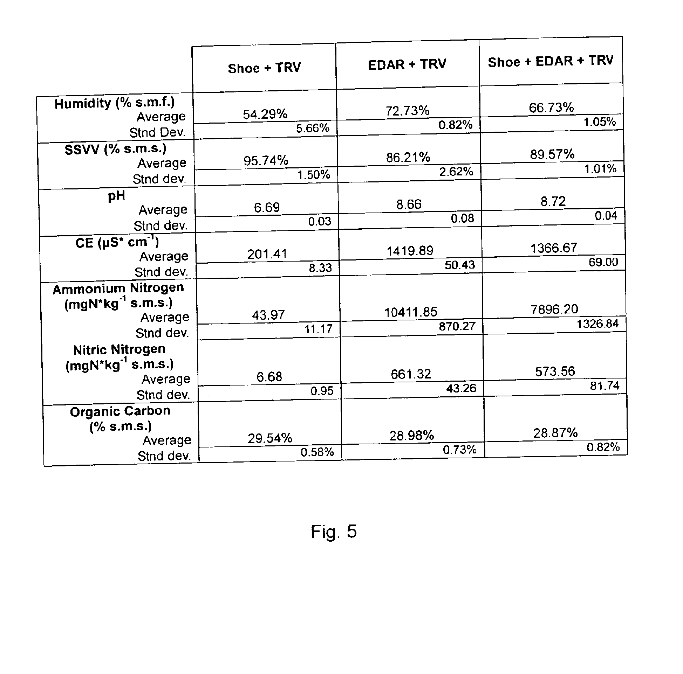

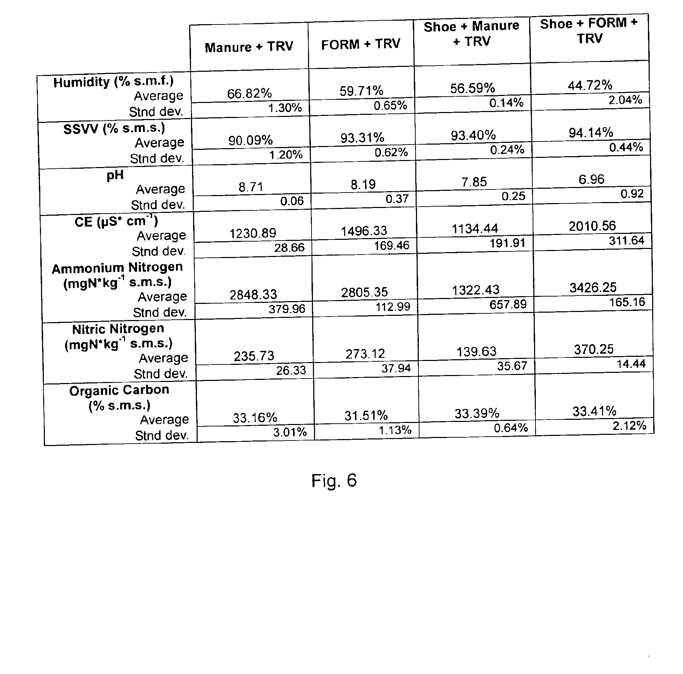

In each treatment at the start and the end of the test and in each reactor: sampling for analysis and weighing of the amount of material and the volume it occupied. The results are shown in the tables in Figs. 3-6.

It is estimated that the duration of the test would be the time needed by the material to develop a normal composting curve in the "control" treatments, with an increase in the temperature and subsequent continued decrease.

### Analyses conducted

Samples of the materials were collected separately: crushed plants (TrV), purifier sludges (Lodo), manure (Est), food remains (FORM) and the mixture of elements making up the shoes (Zap). Equally samples were taken of the initial mixtures that were put into the reactors (TrV, TrV+Zap, Trv+Lodo, TrV+Lodo+Zap, TrV+Est, TrV+Est+Zap, TrV+FORM, TrV+FORM+Zap) and of the end ones when the experiment time concluded. The analyses conducted in all these samples were:
- Total solids (dried at 110°C to a constant mass): the dry mass of the sample was obtained and by difference its humidity. It is expressed in g·kg-1 of fresh mass.
- Volatile solids (SSW) (calcination at 550°C for 4 hours): the calcinated matter is considered equivalent to the organic matter of the sample. It is expressed in g·kg-1 of fresh mass.
- pH (dilution 1:10 in distilled water and shaken for 15 minutes). It is expressed in units of pH.
- Conductivity (dilution 1:10 in distilled water and shaken for 15 minutes). It is expressed in µS·cm-1 (micro Siemens). It is a parameter that is directly related to the concentration of ions and cations in the sample.
- Ammonium nitrogen (N-NH4+) (via distillation and subsequent evaluation in CIH): indicates the nitrogen content in soluble ammonium form in the sample. It is expressed in mg N·kg-1 of dry mass (mg of nitrogen).
- Nitric nitrogen (N-NO3-) (via distillation and subsequent evaluation in CIH): it is a reference to the ammonium nitrogen that has been oxidised into nitrite. It is expressed in mg N·kg-1 of dry mass (mg of nitrogen).
- Total nitrogen (using the Kjedahl method): It is expressed in mg N·kg-1 of dry mass (mg of nitrogen).
- Organic carbon (via oxidation with potassium dichromate): it indicates the oxidisable (and biodegradable) organic carbon in the sample. It is expressed in mg C·kg-1 of dry mass.

### A2 - Results

### Variation of appearance

Although this parameter is somewhat subjective, the experienced observer can obtain important information on how the process has developed by looking at the appearance, colour, odour, humidity, texture,... of the mixture of materials that has passed through the composting process. After the composting process, the samples have a darker colour, greater humidity and apparent superficial colonisation by fungi and actinomycetes (whitish colour), with the reactors where some of the mixtures with FORM were composted, being particularly worthy of a mention in this case.

### Temperature evolution

The two blank and blank problem treatments (TrV and TrV+Zap) experienced a slight temperature increase that reached their maximum (36,2 °C and 38,8 °C respectively) in 34 hours of experimenting, then dropping in slow, continuous fashion.

In the case of the blank problem test, that includes shoe materials, slightly higher temperatures were reached than the reactors that only contained crushed plants. This is an indication of possible greater degrading microbiological activity and/or a greater heat retention capacity due to the presence of these materials.

In the control 1 and problem 1 treatments, where purifier sludge was used as problem waste, the temperature curve followed the typical composting pattern on this scale. The maximum temperatures were reached between 43 (problem 1) and 55 hours (control 1) from the beginning of the experiment, with values of 59.2 °C and 59.9 °C respectively. With respect to this parameter, no differences were observed in its evolution in either of the two treatments.

In the second round of experiments, where manure and FORM were used to test the evolution of the control and problem treatments, significant differences came to light.

In the case of the treatments control 2 and problem 2 (with manure) there is a period of 20 hours until a temperature increase is evident. The maximum temperatures in both treatments were reached after 58 hours of experimenting (52.3 °C and 46.1 °C respectively). The material cooling stage also shows differences, being considerable slower (and even showing small signs of reversing) in the case of the problem 2 reactors.

The treatments carried out with FORM (control 3 and problem 3) show a clearly different evolution, although with significant coincidences. Control 3 experienced a quick temperature increase to values above 60°C, which activated the control alarm to prevent the temperature exceeding this level. The high temperatures were maintained approximately 100 hours before starting to drop.

In the case of problem 3 the process start up and the average temperature increase was slower. The main cause was one of the three reactors, which took 47 hours to become activated and start increasing its temperature, whereas in the other two the temperature increased from the start of the experiment. This reactor reached temperatures above 60°C but at approximately 100 hours into the experiment, while the other two reactors in this treatment did so at 60 hours. From this moment the evolution of the three reactors was parallel, maintaining high temperatures for longer time than control 3.

### Evolution of the oxygen

This parameter is measured in the air mass that is moved from inside the reactors by a low constant flow rate (5 min-1) that is input from the compressor.

In the blank and blank problem treatment it is appreciated that there was not a significant demand of oxygen and that the values were maintained between 18 and 21% (the atmospheric maximum) throughout the whole experiment.

On the contrary, the control 1 and problem 1 treatments displayed a significant drop in the oxygen concentration, slightly greater in the treatment without shoes, during the first 48 hours. From this moment, the levels of oxygen remained in maximum values coinciding with those of the blank and blank problem treatments, indicating that the air flow rate for the oxygen measurement was sufficient to cover the demand of the micro-organisms.

In the case of the treatments in the second round of experiments the evolution of the consumption of oxygen was more irregular according to certain treatments.

For the control 2 and problem 2 treatments (the mixtures with bovine manure) there was a drop in the oxygen levels which reached their minimum point in the first 24 hours, but always above the process limiting values. As in the case of control 1 and problem 1 the treatment with shoes has less oxygen consumption than the control.

In the control 3 and problem 3 treatments (the ones that used FORM in the mixture) the evolution of this parameter was more irregular between the three replicas in both treatments. So in control 3 the minimum oxygen values reached in each reactor were: 13.2%, 7.9% and 14.1%; whereas in problem 3 these values were: 5.1%, 13.2% and 8.9%.

This means that the representation of the evolution of the average values of these reactors does not follow the same pattern as the other two treatments. Anyway, the curves correspond to the temperature evolution, with a drop in the oxygen levels coinciding with the temperature rise at the thermophilic stage, both in the case of control 3 and problem 3, where this is more evident, since the oxygen values inside these reactors were lower all the time that the temperature remained at thermophilic values (above 55°C).

### Balance of masses

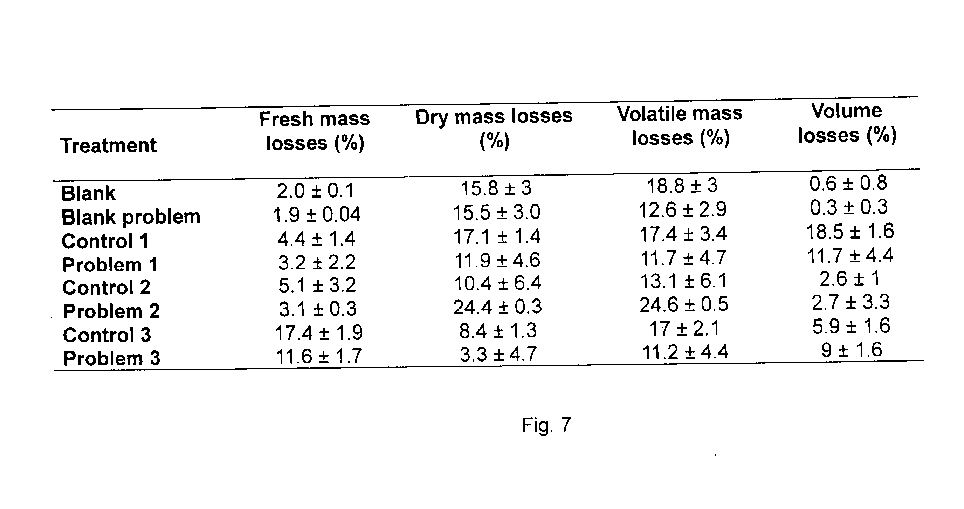

With the initial and final mass of each reactor and the analyses of total solids and volatile solids (equivalent to the organic matter) a balance of the percentual masses has been carried out for each treatment at the end of the composting process. The table in Fig. 7 indicates the average percentage of loss of fresh, dry and volatile mass in each treatment together with the reduction in volume.

It can be considered that the total dry mass lost at the end of the test in all the treatments corresponds, as is logical, with organic matter. The differences between dry mass and volatile mass are minimal and are due to the margin of error in the analytical method used for these parameters.

Only in the case of the treatment with manure is a greater percentual drop in mass evident in the problem treatment (with shoes) than the control treatment (without shoes) treatment. A greater degradation of the organic matter of the initial mixture with shoes has occurred in this treatment.

In all the other treatments the loss of mass was greater in the controls. It is attributable to the presence in the initial mixtures of the constituent material of the shoes, which degrades slower than the TrV mixture and that of any of the problems waste products used.

As for the low losses in fresh mass these are attributable to the high humidity of the end material, a consequence on the one hand of the composting system used (closed system) where the water that evaporates from the composting matrix condenses; and on the other hand, of the absorption of humidity by the plant structuring material (TrV). In this sense, it is observed that the problem treatments (that container shoes) have a smaller loss of dry mass than the controls, since the shoe materials contribute to a greater humidity retention capacity in the composting matrix. This is a very interesting factor for the process with a view to its possible use as structuring material.

### pH and conductivity

Although the initial pH value is not a strict limiting factor for starting up the process, it is considered that the optimum values are between 6 and 9. If the composting process is carried out correctly the final pH values of the material, irrespective of which would have been the initial one, tend to be in slightly alkaline margins (7.5 - 8.5). It is worth remembering that in this test the composting process has not finished, since the experiment time was around fifteen days, and therefore the results do not correspond to those of a mature compost for this parameter. However they do provide interesting information.

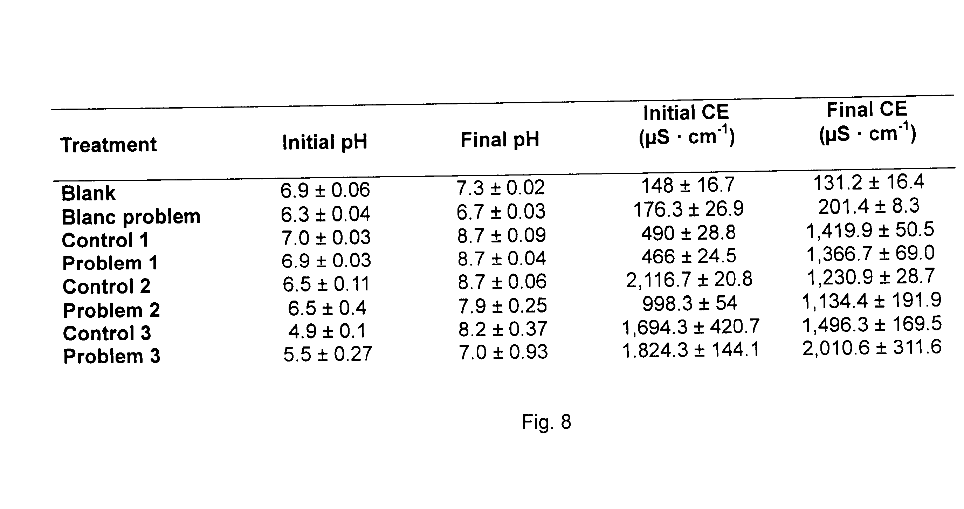

The table in Fig. 8 shows how the problem treatments (the ones containing shoe materials) have an initial pH value in acid values, due to the greater acidity of these materials (4.58).

The only exception is given in the "control 3" treatment since the composition of the FORM favours its quick degradation and release of short chain fatty acids from the moment it is prepared.

The conductivity values show various trends depending on the composition of the initial mixture for composting, both due to the type of waste used and due to the presence or non-presence of shoes in it.

There are three treatments, where there was only plant material for composting, wherein conductivity was reduced: blank, control 2 and control 3. The losses through volatilisation of some components (mainly ammonium) is the main cause of this drop in conductivity. By using a composting system with forced ventilation has enhanced this volatilisation.

However, in the samples with shoes humidity retention is favoured and therefore the soluble compounds involved in sample's conductivity. The only case where it has not been fulfilled and final conductivity is greater than initial conductivity was in the treatments with purifier sludge. These have a high content in ammonia (2,048.78 mg·kg-1 of N s.m.s.) which under the conditions of temperature and pH reached during the test, would tend to be volatilised. The evolution of the temperature in these reactors followed a pattern of a strong initial rise and drop after 80 hours, then holding then at temperatures around 35°C more than half the test, while in the treatments with manure and FORM the temperatures remained high for a longer period.

### Organic carbon

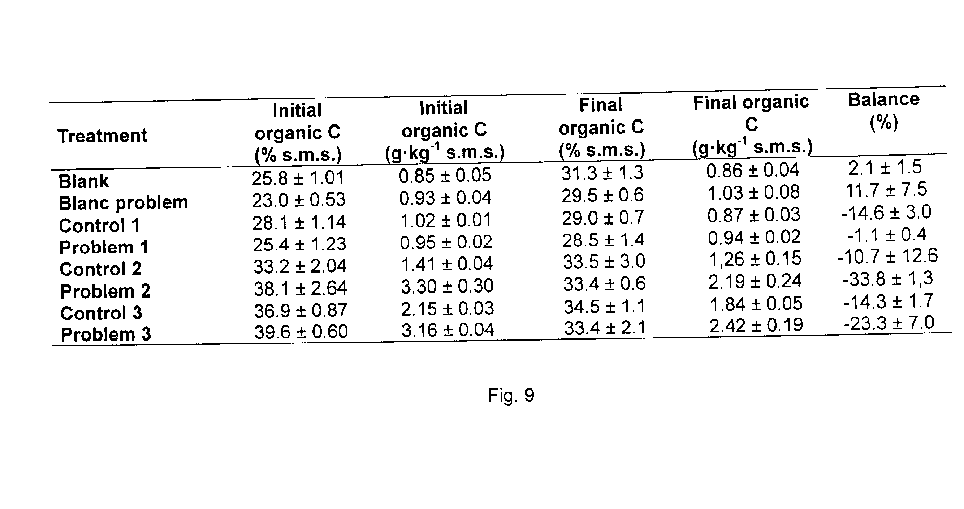

This parameter provides a reference of the concentration of carbon in oxidisable form, and therefore available for the micro-organisms present in the analysed samples. Comparing the initial and final concentrations after the composting test it is possible to know the degree of biological degradation that has been produced by the aerobic micro-organisms. The table in Fig. 9 shows the balance of organic C in the initial and final mixtures in each treatment (expressed in total % and kg over dry matter).

The data shown in Fig. 9 indicates the balance of oxidisable carbon for each treatment. In the case of the blank tests, where only crushed plants were tested (with or without shoe material), the degradation of this carbon dioxide was so small that the actual error of the analytical method masked the results.

In the case of the treatments with sludge, 14.6% of oxidisable carbon was lost in the control treatment, whereas in the problem treatment, degradation was much less.

In the other treatments (with manure and with FORM) degradation is greater in the mixtures with shoes than in the control treatments, with the highest value corresponding to problem 2 treatment (with manure).

### Effect of the composting on the shoe materials

In order to be able to analyse the effect that the composting process had on the mixture of the constituent shoe materials, the final samples of the problem treatments were screened to withdraw a representative amount of these and to be able to make a comparison of the initial mixture analysis data.

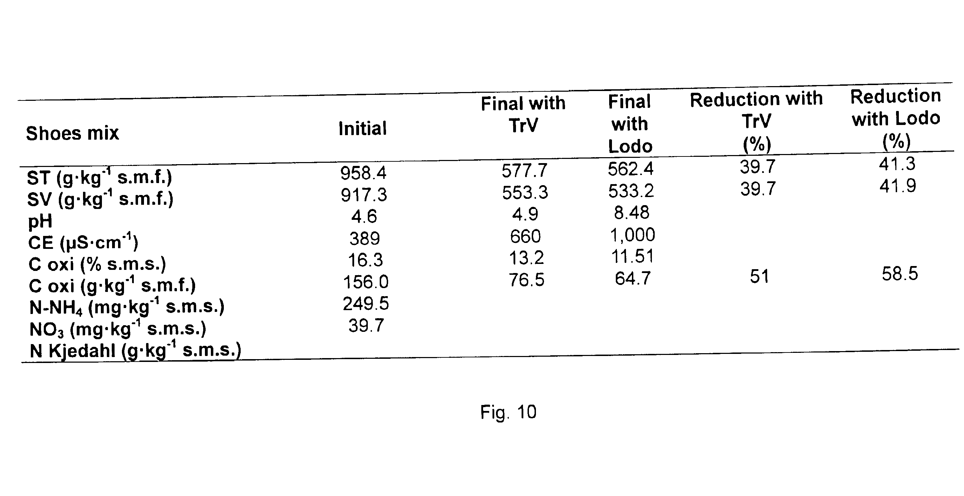

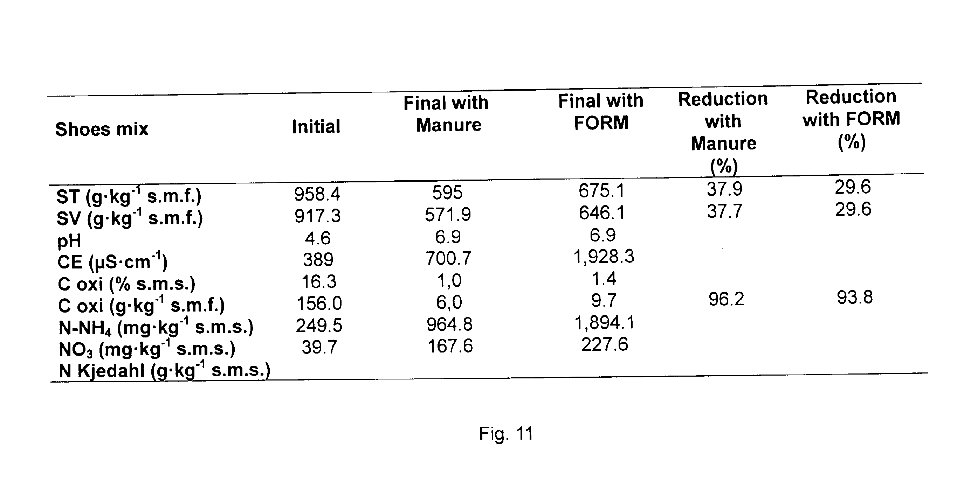

Table Fig. 10 shows the analysis results of the shoe samples that were composted in the reactors in the first round of experiment, where the following treatments were tested: blank, blank problem, control 1 and problem 1 (the first two with TrV and the last two with purifier sludge). The table in Fig. 11 shows the same data and balances, but for the treatments conducted during the second round of experiments: with manure and with FORM.

It is appreciated that this material has considerable humidity absorption capacity and this leads to the significant drop in the total solids (ST) between the initial and final samples.

The volatile solids seems to indicate that the volatile material did degrade (considered to be organic) in all cases.

The initial composition of the shoe mixture with respect to its oxidisable carbon content is low (16.3% s.m.s.). However the reduction in this carbon in oxidisable form was greater than 50% in all treatments, reaching values even above 90% in the treatments with manure and with FORM.

This would indicate that if in the organic matter (or at least the volatile matter) that remains in the composted shoe mass, virtually all the carbon making it up would not be oxidisable (at least in its current format) and, therefore, its biological degradation will be very limited, that is, slow.

### A3 - Conclusions

First. The mixture of materials that would make up the shoes and that through tests conducted by other researchers are called biodegradable, have a volatile solid content (that are considered organic matter) of 95.7%.

Second. In spite of these high organic matter contents, the content of carbon that is oxidisable, and therefore degradable by the micro-organisms responsible for composting, is 16.3%.

Third. All the composting tests show that in the parameters measured there is no evidence that the presence of shoe materials is negative for the composting process.

Fourth. The structure of the shoe materials, which allows the development of micro-organisms on its surface, its content of oxidisable carbon, and its capacity for absorbing humidity, allows it to behave like a structuring material for composting other waste products with a "softer" or more "plastic" consistency like the ones tested (sludge, manure and FORM).

Fifth. Out of the tests conducted material losses in the shoes of between 30 and 42% with respect to the total initial dry mass have been obtained. As for the losses of oxidisable carbon, these were between 51 and 96% with respect to the initial mass of this carbon.

### B) PILOT SCALE TEST

In the pilot scale test a much greater amount of mass was used, maintaining the parameters of the biological process throughout all the stages (fermentation and maturing) until a mature end compost was obtained. To do this the treatment that worked best in the previous tests was selected: the mixture of crushed plant, bovine manure and shoes.

### B1 - Materials and Methods

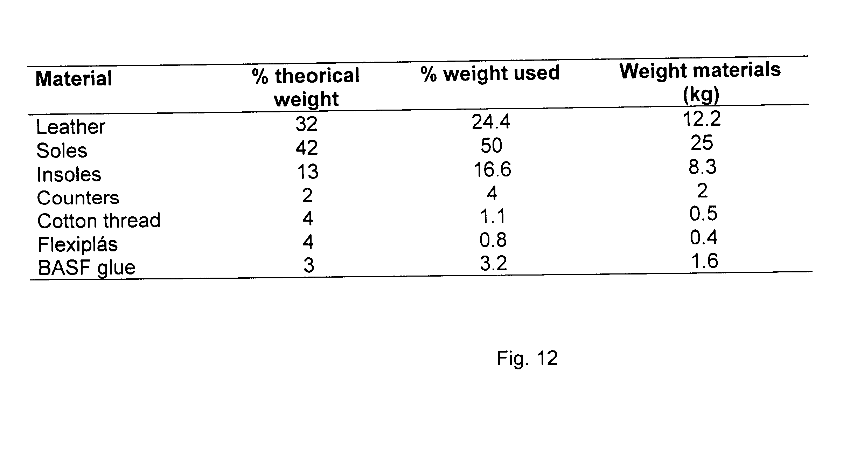

A mixture was made that tried to maintain the same proportion by weight of each element (leather, sole, insole, counter, threads, flexiplás and BASF glue) that there would be in a shoe. The table in Fig. 12 shows the theoretical mixture of shoes and the one used in the test.

As complementary materials for the test crushed woody plant remains were used, or crushed plants (TrV), which was used as structuring material, and bovine manure (Est) as the main organic remains to be composted.

The volumetric mix proportion of all the materials chosen for this test was 1:1:1, that is, the TrV, Shoes and manure in equal parts. In total, the following was used for the mixture:
- 51.4 kg of TrV.
- 49.9 kg of shoe materials.
- 154.6 kg of manure.

The resulting mixture with which the test was carried out had an initial mass of 247.9 kg and a volume of 0.52 m³.

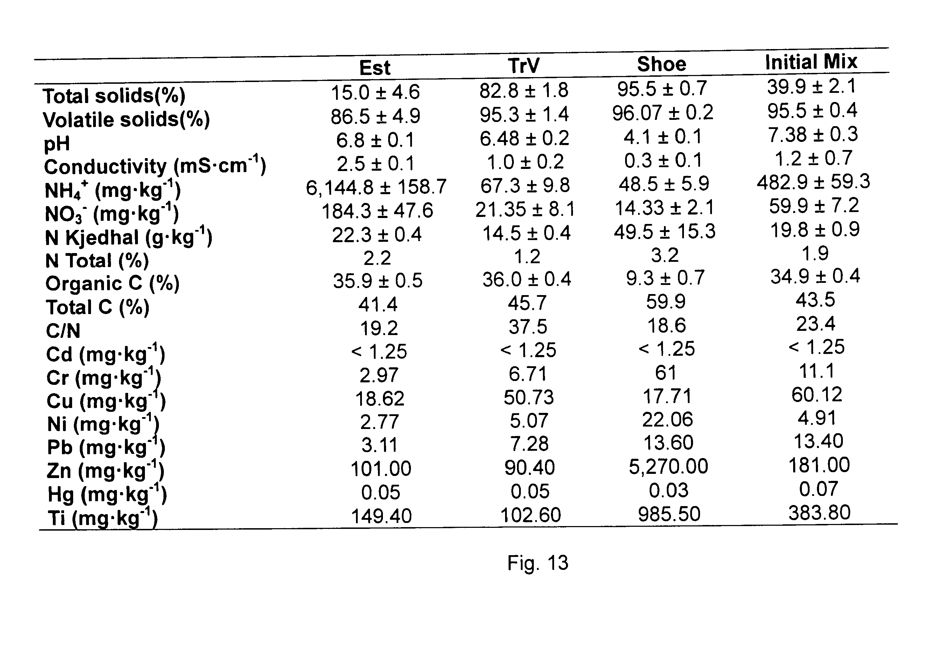

Representative samples were taken of all the initial materials, as well as of the resulting mixture and they were analysed in the laboratory. The analysis are shown in the table in Fig. 13.

The experiment equipment used consisted of an 800 litre capacity cubic reactor. The walls are made of an aluminium sandwich type double panel layer (4 cm total thickness) to contribute to external thermal insulation.

Also the experiment reactor is fitted with:
- Three temperature probes 20, 40 and 60 cm long.
- Gas intake probe connected to a CO2 and 02 analyser.
- Ventilation system with centrifugal blower. It has the possibility of ventilating the mass of air in the upward, downward and recirculating direction.
- System of monitoring, controlling and registering process data using a Eurotherm 5100V graphic register.

The experiment time in the reactor was 18 days, after which the contents was emptied and the experiment moved on to the maturing stage. This was carried out in a conical column measuring 1.2 metres high covered with a semi permeable canvas. This maturing column was made up outside, in a shady area, and every two days temperature data were taken in three points of the mass and of the interstitial oxygen levels.

After 76 days of the process, the test was concluded and all the material was screened with a 10 mm span mesh, obtaining 38.2 kg of compost and separating the material larger than 10 mm into crushed plants and shoe material remains. The various fractions were weighed and all the materials were analysed, both into their physicochemical characteristics and into their content in nutrients and heavy metals. Also specific analyses were carried out for the Ti, since it is the tanning element used to manufacture the leathers, and the maturity, phytotoxicity and germination index for the final compost.

### B2 - Results

### Temperature

The temperature evolution in this test followed a pattern that can be considered usual during composting, albeit in some temperature ranges that were lower than expected, particularly during the maturing stage.

A total of 72 hours after starting the experiment the thermophilic stage was reached, which lasted for ten days. At the end of this period a continuous cooling of the material inside the reactor was observed, that was not influenced by the changes in the direction of the forced ventilation. Therefore, it was decided to conclude the process stage in the reactor and start the maturing stage in the column. Anyway, the process time in a closed system and with forced ventilation like the one used does not add anything to the process after three weeks from the start, with the residence time in the industrial application of these systems being two weeks.

During the maturing stage in the column, it was turned three times (four times if you consider the action of emptying the reactor) and this had a clear effect on the process. When the maturing column was made up there was a very acute drop in temperature, until it was turned, recovering the conical shape of the column and the temperature of the material increased, remaining from that moment above the ambient temperature, but always in lower margins that would be expected.

### Oxygen and CO2

As composting is a oxidative, aerobic and biological process, the evolution of the concentrations of oxygen (02) and CO2 in the material are a clear indication of how the process develops. During the first days of the test there was a drop in the 02 concentrations in the material, but as it is a composting system in a controlled reactor, these values never reached process limiting levels, guaranteeing aerobiosis conditions suitable for the action of the micro-organisms. If comparing the 02 curve with the curve of the material temperature it can be seen how the drop in temperature that occurred around day 11 coincides with an increase in the 02 concentrations in the mass. The degrading biological activity becomes less intense and the demand for 02 reduces.

During the maturing stage in the column the levels of 02 were maintained throughout almost at ambient levels, indicating low process intensity and good column structuring which allows air to pass inside it.

CO2 is produced in the biological activity of micro-organisms, and so it is also an indicator of their activity. Their usual evolution should be contrary to that of 02, with more CO2 being generated when there is greater 02 consumption. The measurement of this gas was only taken during the process stage in the reactor.

### Evolution of the shoe materials

Although no specific analysis has been conducted on each constituent shoe element to save costs, their appearance and physical consistency was assessed during various moments of the test. Two types of degradation were noted, one caused by the combination of the ambient conditions of heat and humidity, and one caused by the action of the micro-organisms which can proliferate and develop in these conditions. So the soles of the shoes became more brittle and fragile, revealing cracks and breakages without any physical action having been carried out on them.

On the insoles a progressive colonisation of fungi could be seen on their surface, which also became very brittle and parts of it were falling away.

The leathers did not show any noticeable evidence of degradation until the final stages of the test, when degraded areas were observed on their surface and they could be broken very easily by hand without hardly any effort, particularly the leathers dyed blue.

The counters that were sent for this test are not supposedly biodegradable and effectively have been the materials that have suffered degradation less, at least in appearance. Only at the end of the test was reduced breaking resistance noticeable.

As for the nylon threads, these remained intact.

Obviously there was a significant impediment to following up the evolution of the glues used: the one from the firm BASF and the one called Flexiplás. However, glue remains have been seen stuck to the leathers, soles and insoles almost up until the last moment.

### The final compost

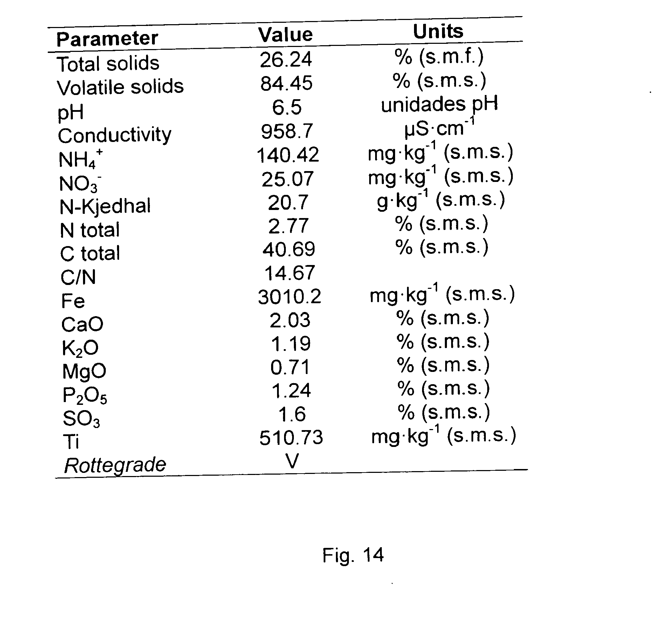

Once the maturing stage of the composting was considered to have concluded the whole column was screened, the various fractions were weighed and representative samples were taken of each one for analysis in the laboratory. The table in Fig. 14 shows the results of the analysis of the compost obtained for its content in total solids, volatile solids (equivalent to organic matter), pH, conductivity, nutrients, titanium (originating mainly from the tanning of the shoe leathers) and the Rottegrade maturity test.

Although the screened compost still showed significant humidity (nearly 75%) this was not a problem for screening. The content in volatile solids is high, indicative of the fact that there was no intense degradation of the organic matter. The pH is slightly acidic, which could also be an indication that degradation of the organic matter was not very effective.

However, the Rottegrade maturity test using self-heating gave the highest stability grade (V), and therefore this would be a mature compost.

Conductivity is low, which indicates scarce presence of soluble salts, making it suitable as a growing substrate.

The values of the various forms of nitrogen indicate that there was volatilisation of the ammonium format rather than nitrification, which could have explained the slightly acid pH. Nevertheless, nitrates were lost in comparison with the concentration of the initial mixture. Having started with a C/N ratio below 30, the percentage of nitrogen that could be preserved in the final compost has reduced.

The contents in essential macronutrients nitrogen, phosphorous (P2O5) and potassium (K2O) were at the usual values for a compost made from bovine manure.

With respect to the concentration of titanium (Ti) in the compost, we found that unusually high values, supposedly from the leathers used in the test. The Ti would have beneficial effects on the physiology of the plants (contents in chlorophyll, development of biomass,...) but it becomes toxic in high doses (Kuzel et al, 2003), and therefore it could be a limiting factor in the application doses recommended for this compost. In the fertilisation tests that are being conducted, further information will be obtained on this aspect and its possible effects on the development of plants.

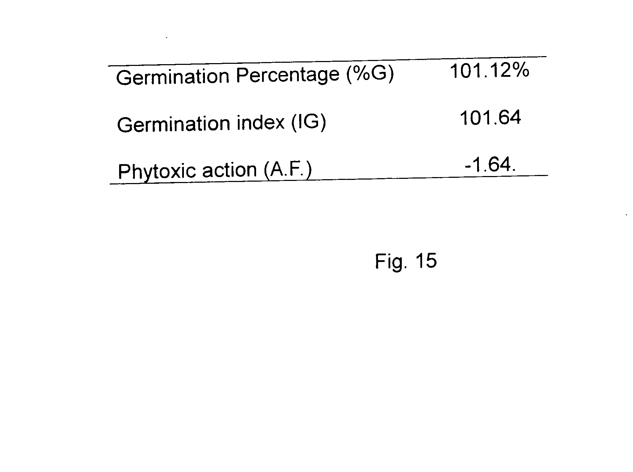

The results corresponding to the germination and phytotoxicity tests with this compost (Zucconi & De Bertoldi, 1981 y 1987) are shown in the table in Fig 15. The negative value of the phytotoxic action and the greater percentage of germination found with respect to the control blank, indicate that the substrate has certain fertilising strength, with higher results than the composts made with other organic remains such as FORM.

The germination index (IG) is closely associated with the conductivity and the maturing of the compost, indicating with these results that this is a mature compost.

### B3 - Conclusions

Generally, there was scarce degradation of the organic matter in this test, but this is not attributable to the presence of shoes.

The shoe leathers and insoles showed partial degradation by the biological action of the micro-organisms, whereas the soles suffered degradation from the ambient conditions (temperature and humidity) of the column which caused increased material fragility.

The final compost obtained was mature and stable in spite of the low degradation.

Some elements, like the counter and the nylon threads did not degrade satisfactorily. Therefore, preferably these materials are replaced by others that are also compostable.

The compost has moderate macronutrient contents.

In the compost significant contents of Ti were found, with potentially beneficial effects, but which could limit the application doses of this compost.

The concentration of Zn in the final compost confers it a class B quality according to Royal Decree 824/2005. The origin of these high Zn contents is in some of the materials making up the shoes. A more detailed analysis has shown that the high Zn content originates in the dress insole, particularly in the latex between the leather and the linen. Therefore, and taking into account that, also, latex is a complex material, with very show biodegradation, preferably the latex is replaced with felt (wool). This way the insole has leather tanned with Ti on one side and linen on the other side, and in the middle the felt. This makes it possible to obtain a class A compost.

The compost germination and phytotoxic action indices show that it has fertilising strength.

### C) TESTS IN COMPOSTING PLANT

Tests carried out in the composting plant have confirmed the quick degradation of the shoes according to the invention. After 6 months the leathers and the soles had degraded. In fact, the leathers had already degraded after 5 months.

The cotton and the wool need the effect of the fungi to degrade. In the maturing stage the temperature drops to below 65°C which allows a greater presence of fungi, which increases the degrading effect on the cotton and wool.

### D) TESTS ON USE AS FERTILISER

Tests were carried out aimed at comparing the effect of various organic and mineral fertilisers, in terms of performance, nutrient bioavailability and the build up of heavy metals. Tests were conducted with lettuce and spinach, in a greenhouse. A total of 7 organic fertilisers made from compost were used (4 homemade compost with different mixtures of household plant and animal waste, and three composts obtained on a large scale using meat, paper and textile industry waste) and they were compared with mineral fertilisers. The compost made from textile industry waste included compostable shoes according to the invention, particularly the compost obtained in the pilot scale test in point B) above (obtained from a mixture of 51.4 kg of TrV, 49.9 kg of shoe materials and 154.6 kg of manure). Each fertiliser was supplied in three different doses, corresponding to 50, 300 and 900 Kg of nitrogen per hectare. The performance, element composition and heavy metal concentration was determined in the plants.

The results show that organic fertilisers, with the same doses of N, produce results that are equivalent to or even higher than with inorganic fertilisers.

As for the lettuce, organic fertilisers produce the same performance as mineral fertilisers in low and average doses. As for the spinach, some of them even improve the performance obtained with mineral fertilisers.

Extremely high doses of fertiliser made from the compost of meat and paper industry waste can reduce performance, which does not occur with household composts or the compost made from textile industry waste (with the lowest salinity). In high doses organic fertilisers can equal mineral fertilisers in terms of N, P and K assimilation and the effectiveness of using N. Most of the heavy metals do not show higher values in the plants fertilised with organic fertilisers, compared with the control. With spinach, the textile compost at 900 Kg N/ha led to slightly higher values in the Cd and Zn contents with respect to the case using mineral fertiliser.

## Claims

1. Compostable shoe **characterized in that** it comprises leather tanned with titanium salts or leather tanned with oxazolidine.

2. Compostable shoe according to claim 1, **characterized in that** it comprises leather tanned with titanium salts.

3. Compostable shoe according to claim 1, **characterized in that** it comprises leather tanned with oxazolidine.

4. Shoe according to any of the claims 1 to 3, **characterized in that** it comprises a sole made from a biodegradable thermoplastic polymer.

5. Shoe according to claim 4, **characterized in that** said sole is made from a material from the group made up of polycaprolactone, polylactic acid, polybutylene succinate, starch/cellulose acetate, polyurethane and mixtures of the above.

6. Shoe according to claim 5, **characterized in that** said polycaprolactone comprises an additive from the group made up of dioctyl phthalate, polyethylene glycol, nanoclay, sorbitol acetal and cork.

7. Shoe according to claim 5, **characterized in that** said mixture is a mixure of polycaprolactone with polylactic acid and polybutylene succinate or a mixture of polycaprolactone with polyethylene glycol.

8. Shoe according to claim 4, **characterized in that** said sole is made from a material from the group made up of polyhydroxy alkanoates, polythioesters and propanodiol.

9. Shoe according to claim 4, **characterized in that** said sole is made from a material from the group made up of mixtures of microbial aliphatic polyesters with starch, poly(hydroxybutyrate-co-hydroxyvalerate), biodegradable copolyester and mixture of starch with fibres.

10. Shoe according to claim 4, **characterized in that** said sole is made from a material from the group made up of styrenic block copolymers, thermoplastic elastomeric polyester, mixtures of polyolefins, elastomeric alloys, thermoplastic polyurethanes, thermoplastic copolyester and thermoplastic polyamide.

11. Shoe according to any of the claims 1 to 10, **characterized in that** it comprises an aqueous base adhesive, preferably said adhesive is a caprolactone.

12. Shoe according to any of the claims 1 to 11, **characterized in that** it comprises an insole and/or cotton laces.

13. Method for composting organic matter, **characterized in that** it comprises a stage of preparing a compostable mass in which shoes according to any of the claims 1 to 12, have been mixed with organic matter.

14. Method according to claim 13, **characterized in that** it comprises a stage of crushing said shoes.

15. Method according to one of the claims 13 or 14, **characterized in that** it comprises a stage of recirculating parts of said non-degraded shoes.

16. Use of shoes according to any of the claims 1 to 12, for the composting thereof.

17. Use of shoes according to any of the claims 1 to 12, as structuring material for composting organic matter.

18. Use of a compost obtained from a compostable mass comprising organic matter and shoes according to any of the claims 1 to 12, as fertiliser.

19. Use of shoes according to any of the claims 1 to 12, as total or partial substitute for crushed woody plant remains in the composting of a compostable mass comprising organic matter.
